# EUROPÄISCHE PATENTSCHRIFT

(11) **EP 4 021 759 B1**
(45) Veröffentlichungstag und Bekanntmachung des Hinweises auf die Patenterteilung: **22.01.2025**
(21) Anmeldenummer: 20764328.9
(22) Anmeldetag: 25.08.2020
(51) Int. Cl.: B60N 2/56

(54) **FAHRZEUGSITZ UND HINTERSITZANLAGE MIT LÜFTEREINRICHTUNG**
VEHICLE SEAT AND BACK SEAT SYSTEM WITH FAN ARRANGEMENT
SIÈGE DE VÉHICULE ET SYSTÈME DE SIÈGE ARRIÈRE DOTÉ D'UN AGENCEMENT DE VENTILATEUR

(30) Priorität: 29.08.2019 DE 102019212992
(43) Veröffentlichungstag der Anmeldung: 06.07.2022
(73) Patentinhaber: VOLKSWAGEN AKTIENGESELLSCHAFT, 38440 Wolfsburg (DE)
(72) Erfinder: LÜDECKE, Christoph, 38108 Braunschweig (DE); BOY, Hans-Joachim, 38518 Gifhorn (DE); TRETTIN, Sven, 38479 Tappenbeck (DE)
(86) Internationale Anmeldenummer: PCT/EP2020/073696
(87) Internationale Veröffentlichungsnummer: WO 2021/037825

(56) Entgegenhaltungen:
- DE-A1- 102011 121 331
- DE-A1- 102015 210 624
- US-A1- 2018 272 908
- US-A1- 2019 210 492
- US-A1- 2020 130 548

## Beschreibung

Die Erfindung betrifft einen Fahrzeugsitz für eine Hintersitzanlage eines Kraftfahrzeugs, mit einem Sitzteil, das eine Bodenwanne und ein auf der Bodenwanne angeordnetes Sitzpolster aufweist, wobei die Bodenwanne dazu ausgebildet ist, auf einer Karosseriewand des Kraftfahrzeugs abgelegt und befestigt zu werden, und mit einer in das Sitzteil integrierten Lüftereinrichtung, die zumindest einen elektrisch betreibbaren Lüfter und zumindest einen von einem Randbereich des Sitzteils zu dem Lüfter führenden Luftkanal aufweist.

Weiterhin betrifft die Erfindung eine Hintersitzanlage für ein Kraftfahrzeug, mit einer im Hintersitzbereich des Kraftfahrzeugs erhöht angeordneten und zumindest im Wesentlichen horizontal ausgerichteten Karosseriewand, und mit zumindest einem auf der Karosseriewand angeordneten Fahrzeugsitz.

Fahrzeugsitze der eingangs genannten Art sind aus dem Stand der Technik bekannt. Lüftereinrichtungen für Fahrzeugsitze finden sich zunehmend in allen Arten von Kraftfahrzeugen. Durch sie wird eine aktive Sitzbelüftung ermöglicht, durch welche Umgebungsluft angesaugt und durch das Sitzpolster und einen Sitzbezug hindurch gefördert wird. Dazu weist beispielsweise der Sitzbezug eine Vielzahl von Luftaustrittsöffnungen auf und das Sitzpolster ist luftdurchströmbar ausgebildet. Beispielsweise die Patentschrift DE 196 28 698 C1 offenbart einen solchen Fahrzeugsitz. Dabei ist die Luftansaugöffnung unterhalb des Sitzteils angeordnet, sodass aus dem Raum unterhalb des Sitzteils Luft angesaugt wird. Dabei erfährt der Luftstrom zum einen eine Strömungsrichtungsumkehr und zum anderen wird die Luft in einem Raum angesaugt, welcher eher staub- und schmutzbehaftet ist. Aus der Offenlegungsschrift DE 10 2011 122 124 A1 ist ein gattungsgemäßer Fahrzeugsitz bekannt, der eine Lüftereinrichtung aufweist. Ein Luftkanal ist dabei an der Unterseite der Bodenwanne, welche im montierten Zustand der Karosseriewand zugewandt ist, ausgebildet. Dabei ist der Fahrzeugsitz auf einer Karosseriewand ablegbar und eignet sich dadurch für eine Hintersitzanlage, bei welcher beispielsweise auf ein individuelles Sitzgestell verzichtet wird.

Die Offenlegungsschrift DE 10 2011 121 331 A1 offenbart eine Sitzbelüftungseinrichtung für einen Fahrzeugsitz, mit einem Luftversorgungskanal, der einen Lüfterkanalbereich und einen damit verbundenen Versorgungskanalbereich umfasst, wobei letzterer in einer Mündungsöffnung mündet. Die Mündungsöffnung ist an einer Schmalseite einer Polsterschicht angeordnet und durch eine Abdeckung kaschiert. Sowohl der Lüfterkanalbereich als auch der damit verbundene Versorgungskanalbereich verlaufen vollständig innerhalb der Polsterschicht. Aus den Offenlegungsschriften US 2019 / 210 492 A1, DE 10 2015 210 624 A1 und US 2018 / 272 908 A1 sind weitere Fahrzeugsitze mit Lüftereinrichtungen bekannt.

Der Erfindung liegt die Aufgabe zugrunde, einen verbesserten Fahrzeugsitz zu schaffen, der eine verbesserte Luftführung für die Lüftereinrichtung gewährleistet, ohne hierzu einen Material- oder Kostenmehraufwand zu benötigen.

Die der Erfindung zugrundeliegende Aufgabe wird durch einen Fahrzeugsitz mit den Merkmalen des Anspruchs 1 gelöst. Dieser hat den Vorteil, dass er trotz der Ausbildung für eine Hintersitzanlage eine vorteilhafte Luftansaugung gewährleistet, die geringe Strömungsverluste verursacht und dennoch von außen für den Benutzer nicht ohne weiteres erkennbar ist. Erfindungsgemäß ist hierzu vorgesehen, dass der Luftkanal zumindest im Wesentlichen zwischen dem Sitzpolster und der Bodenwanne ausgebildet ist, dass die Bodenwanne in dem Randbereich einen Randabschnitt aufweist, der beabstandet zu dem Sitzpolster angeordnet ist, um eine Ansaugöffnung zu bilden, und dass der Luftkanal in die Ansaugöffnung beabstandet von einem Außenrand des Sitzpolsters mündet. Der Randabschnitt der Bodenwanne liegt also beabstandet zu dem Sitzpolster, sodass zwischen Sitzpolster und Randabschnitt eine Ansaugöffnung gebildet ist, die dem Zuführen der Luft zum Belüften dient. Weil die Bodenwanne unterhalb des Sitzteils liegt, wird durch den Abstand des Randabschnitts zu dem Sitzpolster ein Abstand in der Höhe (bei bestimmungsgemäßer Montage) erreicht, sodass die Ansaugöffnung unterhalb des Sitzpolsters liegt. Weil der Luftkanal beabstandet zu dem Außenrand des Sitzpolsters in die Ansaugöffnung mündet, ist der Luftkanal von außen zum einen nicht ersichtlich, und zum anderen bildet die Ansaugöffnung eine Verlängerung des Luftkanals, die jedoch, wie zuvor bereits beschrieben, unterhalb des Sitzpolsters liegt. Dadurch, dass der Luftkanal in die Ansaugöffnung übergeht, und diese dem Randabschnitt beziehungsweise dem Randbereich des Fahrzeugsitzes, insbesondere des Sitzteils, zugewandt ist, ergibt sich eine Luftstromförderrichtung, die Luft aus dem Bereich vor dem Fahrzeugsitz und nicht unterhalb des Fahrzeugsitzes ansaugt. Insbesondere weist der Fahrzeugsitz außerdem eine dem Sitzteil zugeordnete Rückenlehne auf, die beispielsweise fest oder verschwenkbar an dem Sitzteil, an dem in Längsrichtung von der Ansaugöffnung abgewandten Ende des Sitzteils gelagert ist. Bei der Verwendung in einer Hintersitzanlage wäre ein Ansaugen unterhalb des Fahrzeugsitzes nur mit erhöhtem Aufwand möglich, weil durch die darunterliegende Karosseriewand der Raum unterhalb des Sitzteils üblicherweise geschlossen ist. Durch die vorteilhafte Ausbildung des Fahrzeugsitzes ergibt sich somit auch der Vorteil, dass dieser auch bei der Verwendung in eine Hintersitzanlage einen vorteilhaften Luftstrom zum Belüften eines Passagiers beziehungsweise eines Benutzers des Fahrzeugsitzes gewährleistet.

Besonders bevorzugt sind der Luftkanal und die Ansaugöffnung derart ausgebildet, dass ein Luftstrom von der Ansaugöffnung zu dem Lüfter strömungsumkehrfrei gelangt. Es folgt somit keine Strömungsumkehr im Strömungsverlauf des Luftstroms von der Ansaugöffnung zu dem Lüfter, wodurch Strömungsverluste vermieden und hohe Luftstromvolumen erreicht werden.

Bevorzugt ist der Randabschnitt der Bodenwanne derart ausgerichtet, dass ein Abstand zwischen Sitzpolster und Bodenwanne zu dem Außenrand des Sitzpolsters hin zunimmt. Der Randabschnitt ist somit im montierten Zustand des Fahrzeugsitzes nach unten geneigt, sodass ein freies Ende tiefer angeordnet ist, als das dem Luftkanal zugewandte Ende. Hierdurch entsteht im Bereich der Ansaugöffnung ein Ansaugtrichter, der eine verbesserte Luftansaugung und Zuführung erlaubt.

Besonders bevorzugt ist der Lüfter beabstandet zu dem Randabschnitt in dem Luftkanal angeordnet, sodass der Lüfter beispielsweise weiter im hinteren Bereich oder zumindest beabstandet vom Außenrand des Sitzpolsters angeordnet ist, um Komfortvorteile zu erzielen, dadurch, dass der Lüfter in einem Bereich liegt, der durch das Sitzpolster besser oder stärker geschützt ist.

Weiterhin ist bevorzugt vorgesehen, dass der Lüfter auf der von der Bodenwanne abgewandten Seite des Luftkanals angeordnet ist. Der Lüfter liegt somit oberhalb des Luftkanals und saugt die Luft von der Ansaugöffnung an und fördert diese direkt nach oben in das Sitzpolster beziehungsweise durch das Sitzpolster und einen optionalen Sitzbezug hindurch. Hierdurch ergibt sich eine vorteilhafte, insbesondere bauraumsparende Anordnung des Lüfters in dem Sitzteil.

Weiterhin ist bevorzugt vorgesehen, dass der Luftkanal zumindest auf der Seite des Luftpolsters eine das Luftpolster stützende Kanalwand aufweist. Durch die Kanalwand ist gewährleistet, dass der Luftkanal nicht durch eine Belastung des Sitzpolsters verengt oder einstürzen kann. Durch die Kanalwand wird somit der Durchströmungsquerschnitt des Luftkanals zu jeder Zeit sichergestellt.

Der Lüfter weist bevorzugt ein Gehäuse auf, das mit der Kanalwand verbunden ist. Dadurch ist zum einen ein sicherer und strömungsoptimierter Fluss des Luftstroms von dem Luftkanal in das Gehäuse des Lüfters gewährleistet, und zum anderen eine einfache Montage der Lüftereinrichtung geboten. Insbesondere können der Luftkanal beziehungsweise die Kanalwand und das Gehäuse des Lüfters als Vormontageeinheit ausgebildet sein, um dann gemeinsam an dem Sitzpolster und/oder der Bodenwanne angeordnet und/oder befestigt zu werden.

Vorzugsweise ist in dem Sitzpolster ein Drahtrahmen, insbesondere ein Federradrahmen angeordnet, welcher zur Federung und damit zur Komfortsteigerung des Sitzteils dient. Der Drahtrahmen ist bevorzugt um die Lüftereinrichtung herum geführt, sodass sich der Drahtrahmen und das Gehäuse des Lüfters sowie die Kanalwand des Luftkanals nicht treffen. Dadurch ist eine vorteilhafte Integration der Federung in das Sitzpolster gewährleistet.

Die erfindungsgemäße Hintersitzanlage mit den Merkmalen des Anspruchs 9 zeichnet sich durch die erfindungsgemäße Ausbildung des Fahrzeugsitzes aus. Es ergeben sich hierdurch die bereits genannten Vorteile.

Bevorzugt ist die Lüftereinrichtung einer Längsseite des Sitzteils zugeordnet. Damit liegt die Lüftereinrichtung bei einer Draufsicht auf das Sitzteil gesehen, außermittig und damit in einem Bereich, der durch einen Benutzer weniger stark belastet wird, sodass ein optimaler Sitzkomfort gewährleistet ist. Darüber hinaus liegt damit auch die Ansaugöffnung außermittig, sodass Luft mit hoher Wahrscheinlichkeit aus einem Bereich angesaugt wird, in welchem sich die Beine des Benutzers bei einer normalen Sitzstellung erwartungsgemäß nicht befinden. Besonders bevorzugt ist jeder Längsseite des Sitzteils jeweils eine entsprechend ausgebildete Lüftereinrichtung zugeordnet, sodass das Luftfördervolumen verdoppelt und eine verbesserte Belüftung des Benutzers des Fahrzeugsitzes gewährleistet ist.

Im Folgenden soll die Erfindung anhand der Zeichnungen näher erläutert werden. Dazu zeigen
- Figur 1: eine perspektivische Darstellung einer vorteilhaften Hintersitzanlage eines Kraftfahrzeugs,
- Figur 2: eine perspektivische Schnittdarstellung eines Fahrzeugsitzes der Hintersitzanlage und
- Figur 3: eine Längsschnittdarstellung des Fahrzeugsitzes.

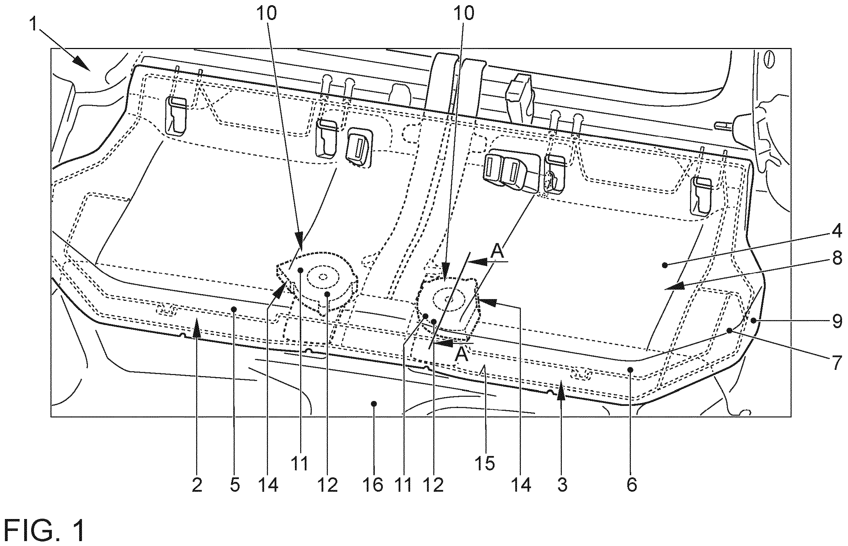

Figur 1 zeigt in einer vereinfachten perspektivischen Darstellung eine Hintersitzanlage 1 mit zwei Fahrzeugsitzen 2 und 3, die nebeneinander angeordnet sind. Die Hintersitzanlage 1 weist eine Karosseriewand 4 auf, auf welcher von jedem Fahrzeugsitz 2, 3 jeweils ein Sitzteil 5, 6 angeordnet ist. Die Sitzteile 5, 6 weisen jeweils einen hier nicht dargestellten Sitzbezug 7, ein unterhalb des Sitzbezugs befindliches Sitzpolster 8 sowie eine Bodenwanne 9 auf. Die Bodenwanne 9 liegt zumindest bereichsweise auf der Karosseriewand 4 auf und dient damit zur Halterung und Befestigung der Fahrzeugsitze 2, 3 an der Karosserie des Kraftfahrzeugs. Die Bodenwanne 9 dient außerdem als Träger für das Sitzpolster 8 und den Sitzbezug 9. Gemäß dem vorliegenden Ausführungsbeispiel weisen die Sitzteile 5, 6 ein gemeinsames Sitzpolster 8 sowie einen gemeinsamen Sitzbezug 7 sowie eine gemeinsame Bodenwanne 9 auf. Die Bodenwanne 9, der Sitzbezug 7 und das Sitzpolster 8 erstrecken sich somit über die gesamte Breite der Hintersitzanlage 1. Die Sitzteile 5, 6 sind spiegelbildlich zueinander und ansonsten zumindest im Wesentlichen gleich aufgebaut. Anhand des Sitzteils 3 soll nunmehr der Aufbau beider Sitzteile 5, 6 beschrieben werden.

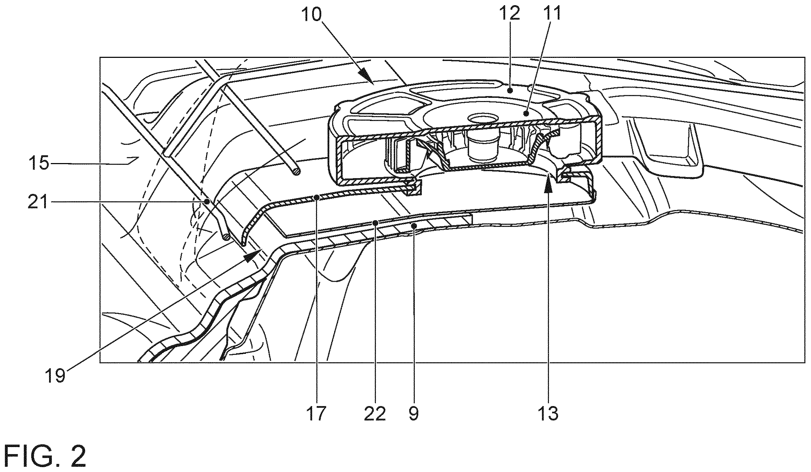

Figur 2 zeigt die Hintersitzanlage 1 in einer perspektivischen Schnittdarstellung entlang der Linie A-A aus Figur 1. Das Sitzteil 6 weist eine Lüftereinrichtung 10 auf, die in das Sitzteil 6 integriert ausgebildet ist. Dem Sitzteil 5 ist eine entsprechend ausgebildete Lüftereinrichtung 10 zugeordnet, wie in Figur 1 gezeigt. Die Lüftereinrichtung 10 weist einen Lüfter 11 auf, der ein Lüfter-Gehäuse 12 aufweist, in welchem ein hier nicht dargestelltes Lüfterrad elektromotorisch antreibbar ist. Das Gehäuse 12 weist eine Lüftereinlassöffnung 13 sowie eine, lediglich in Figur 1 gezeigte, Lüfteraustrittsöffnung 14 auf. Die Lüftereintrittsöffnung 13 ist axial ausgerichtet bezogen auf die Drehachse des Lüfterrads, und die Lüfteraustrittsöffnung 14 zumindest im Wesentlichen radial oder tangential. Die Lüfteraustrittsöffnung 14 liegt dabei in dem Sitzpolster 8, sodass durch den Lüfter 10 geförderte Luft in das Sitzpolster 8 gefördert wird. Das Sitzpolster 8 ist luftdurchlässig ausgebildet oder weist eine Mehrzahl von Luftkanälen auf, die von der Lüfteraustrittsöffnung 14 zu dem ebenfalls luftdurchlässig, insbesondere mit einer Vielzahl von Luftaustrittsöffnungen versehenen Sitzbezug 7 führen.

Der Lüfter 11 ist beabstandet von einem Außenrand 15 in Längserstreckung des Sitzteils 6 angeordnet, das von dem Sitzbezug 7 gebildet wird. Der Außenrand 15 liegt dabei in Fahrtrichtung vorne beziehungsweise am vorderen Ende des Sitzteils 6, sodass der Lüfter 11 zurückgesetzt von dem vorderen Außenrand des Sitzteils 6 in dem Sitzteil 6 angeordnet ist. Darüber hinaus ist der Lüfter 11 in einer Draufsicht des Sitzteils 6 betrachtet, nicht mittig, sondern einer Längsseite, nämlich der dem benachbarten Sitzteil 5 zugewandten Längsseite des Sitzteils 6 angeordnet. Damit ist der Lüfter 11 insgesamt in einem Bereich angeordnet, der bei Benutzung des Fahrzeugsitzes 3 eher wenig belastet ist. Gemäß dem vorliegenden Ausführungsbeispiel liegen die Lüfter 11 beider Sitzteile 5, 6 nahe zur Mitte der Hintersitzanlage 1 hin angeordnet, sodass sie in einem Bereich liegen, in welchem ein Mitteltunnel 16 durch die Karosserie des Kraftfahrzeugs geführt ist. Damit liegen die Lüfter in einem Bereich, in welchem üblicherweise die Beine von den Benutzern der Fahrzeugsitze 2, 3 nicht liegen, sodass eine vorteilhafte Luftansaugung gewährleistet ist.

Das Gehäuse 12 des Lüfters 11 ist des Weiteren mit einer Kanalwand 17 verbunden, auf welcher das Sitzpolster 8 bereichsweise aufliegt. Die Kanalwand 17 liegt beabstandet zu der Bodenwanne 9, sodass zwischen der Bodenwanne 9 und der Kanalwand 17 ein Luftkanal 18 gebildet ist, der zu der Lüftereintrittsöffnung 13 führt. Optional ist der Kanalwand 17 eine weitere Kanalwand 22 gegenüberliegend angeordnet, wobei die Kanalwand 22 auf der Bodenwanne 9 aufliegt, sodass der Luftkanal 18 zwischen den Kanalwänden 17, 22 ausgebildet ist. Besonders bevorzugt sind die Kanalwände 17, 22 einstückig miteinander ausgebildet oder zumindest fest miteinander verbunden.

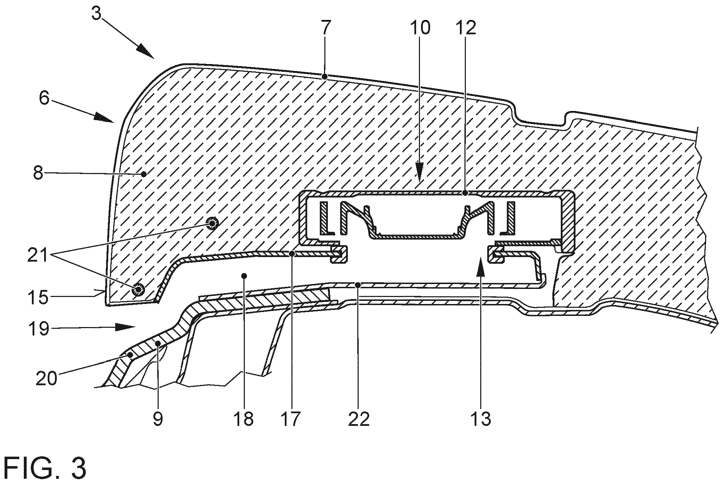

Figur 3 zeigt zum leichteren Verständnis eine vereinfachte Schnittdarstellung des Fahrzeugsitzes 3 entlang der Linie A-A aus Figur 1. Hierbei ist das Sitzpolster 8 ebenfalls eingezeichnet, ebenso wie der Sitzbezug 7. Der Lüfter 11 ist an der oberen Kanalwand 17 angeordnet, sodass die Lüftereintrittsöffnung 13 in der Kanalwand 17 ausgebildet und der Lüfter 11 oberhalb des Luftkanals 18 angeordnet ist. An seinem von dem Lüfter 11 abgewandten Ende mündet der Luftkanal 18 in eine Ansaugöffnung 19, die zwischen der Bodenwanne 9 und dem Sitzpolster 8 ausgebildet ist. Während im Wesentlichen das Sitzpolster 8 auf der Bodenwanne 9 aufliegt, abgesehen vom Bereich der Lüftereinrichtung 10, wobei das Sitzpolster 8 insbesondere auch seitlich benachbart zu der Lüftereinrichtung an seinem Außenrand 15 auf der Bodenwanne aufliegt, wird im Bereich des Luftkanals 18 die Ansaugöffnung 19 dadurch gebildet, dass ein dem Außenrand 15 zugewandter Randabschnitt 20 der Bodenwanne 9 beabstandet zu dem Sitzpolster 8 unterhalb des Sitzpolsters 8 angeordnet ist. Dadurch entsteht ein Spalt zwischen der Bodenwanne 9 und dem Sitzpolster 8, der die Ansaugöffnung 19 bildet. Gemäß dem vorliegenden Ausführungsbeispiel ist der Randabschnitt 20 der Bodenwanne 9 derart geneigt ausgebildet, dass der Abstand zwischen Bodenwanne 9 und Sitzpolster 8 in Richtung des Außenrands 15 des Sitzpolsters 8 beziehungsweise des Sitzteils 6 zunimmt. Dadurch entsteht eine im Längsschnitt gesehen trichterförmige Ansaugöffnung 19. Der Luftkanal 18 mündet in die Luft-Ansaugöffnung 19 beabstandet zu dem Außenrand 15, sodass die Ansaugöffnung 19 den Luftkanal 18 unterhalb des Sitzpolsters 8 verlängert.

Durch die vorteilhafte Ausbildung des Fahrzeugsitzes 3 ist gewährleistet, dass die Luft aus dem vor dem Fahrzeugsitz 3 liegenden Fußraumbereich des Kraftfahrzeugs 1 angesaugt und ohne Strömungsrichtungsumkehr in das Luftpolster 8 hinein gefördert wird. Dadurch werden geringe Strömungsverluste erreicht und die Effizienz der Lüftereinrichtung 10 erhöht. Dadurch, dass der Luftkanal 18 zwischen der Bodenwanne 9 und dem Sitzpolster 8 ausgebildet ist, wird der Luftkanal 18 zusammen mit dem Sitzteil 5 beziehungsweise 6 bereits mitgefertigt, sodass das Sitzteil 5, 6 auch auf unterschiedlichen beziehungsweise unterschiedlich geformten Karosseriewänden 4 einer Hintersitzanlage 1 aufsetzbar ist, ohne dass dadurch die Luftführung oder Luftströmung beeinträchtigt wird. Vielmehr wird sichergestellt, dass der Luftkanal 18 stets die gewünschte Kontur und Form sowie den gewünschten Verlauf aufweist, und dass durch die vorteilhafte Ansaugöffnung 19 ein effizientes und sicheres Ansaugen von Luft zum Belüften gewährleistet ist.

Optional ist in dem Sitzpolster 8 außerdem ein Federdrahtrahmen 21 angeordnet, der sich durch das Sitzpolster erstreckt, um die Belastbarkeit und Steifheit des Sitzpolsters 8 zu erhöhen und gleichzeitig den Sitzkomfort für Passagiere zu verbessern. Der Federdrahtrahmen 21 ist dabei derart ausgebildet, dass er auch die Lüftereinrichtung 10 schützt, sodass der Betrieb der Lüftereinrichtung 10 dauerhaft gewährleistet ist.

Optional, in den Figuren jedoch nicht dargestellt, ist jedem Sitzteil 5, 6 zumindest eine weitere Lüftereinrichtung 10 zugeordnet, sodass der erreichbare Volumenstrom zum Belüften einer auf dem jeweiligen Sitzteil 5, 6 befindlichen Person verdoppelt wird oder verdoppelt werden kann.

### Bezugszeichenliste

- 1: Hintersitzanlage
- 2: Fahrzeugsitz
- 3: Fahrzeugsitz
- 4: Karosseriewand
- 5: Sitzteil
- 6: Sitzteil
- 7: Sitzbezug
- 8: Sitzpolster
- 9: Bodenwanne
- 10: Lüftereinrichtung
- 11: Lüfter
- 12: Lüfter-Gehäuse
- 13: Lüftereinlassöffnung
- 14: Lüfterauslassöffnung
- 15: Außenrand
- 16: Mitteltunnel
- 17: Kanalwand
- 18: Luftkanal
- 19: Ansaugöffnung
- 20: Randabschnitt
- 21: Federdrahtrahmen
- 22: Kanalwand

## Patentansprüche

1. Fahrzeugsitz (2,3) für eine Hintersitzanlage (1) eines Kraftfahrzeugs, mit einem Sitzteil (5,6), das eine Bodenwanne (9) und ein auf der Bodenwanne (9) angeordnetes Sitzpolster (8) aufweist, wobei die Bodenwanne (9) dazu ausgebildet ist, auf einer Karosseriewand (4) des Kraftfahrzeugs abgelegt und befestigt zu werden, und mit einer in das Sitzteil (5,6) integrierten Lüftereinrichtung (10), die zumindest einen elektrisch betreibbaren Lüfter (11) und zumindest einen von einem Randbereich des Sitzteils (5,6) zu dem Lüfter (11) führenden Luftkanal (18) aufweist, wobei der Luftkanal (18) ist zumindest im Wesentlichen zwischen dem Sitzpolster (8) und der Bodenwanne (9) ausgebildet die Bodenwanne (9) aufweist in dem Randbereich einen Randabschnitt (20) , der beabstandet zu dem Sitzpolster (8) unterhalb des Sitzpolsters (8) angeordnet ist, um einen Spalt zwischen der Bodenwanne (9) und dem Sitzpolster (8) als eine Ansaugöffnung (19) zu bilden, und der Luftkanal (18) mündet in die Ansaugöffnung (19) beabstandet von einem Außenrand (15) des Sitzpolsters (8) , sodass die Ansaugöffnung (19) den Luftkanal (18) unterhalb des Sitzpolsters (8) verlängert.

2. Fahrzeugsitz nach Anspruch 1, **dadurch gekennzeichnet, dass** der Randabschnitt (20) der Bodenwanne (9) derart ausgerichtet ist, dass ein Abstand zwischen Sitzpolster (8) und Bodenwanne (9) zu dem Außenrand (15) des Sitzpolsters (8) hin zunimmt.

3. Fahrzeugsitz nach einem der vorhergehenden Ansprüche, **dadurch gekennzeichnet, dass** der Lüfter (11) beabstandet zu dem Randabschnitt (20) in dem Luftkanal (18) angeordnet ist.

4. Fahrzeugsitz nach einem der vorhergehenden Ansprüche, **dadurch gekennzeichnet, dass** der Luftkanal (18) und die Ansaugöffnung (19) derart ausgebildet sind, dass ein Luftstrom von der Ansaugöffnung (19) zu dem Lüfter (11) strömungsumkehrfrei gelangt.

5. Fahrzeugsitz nach einem der vorhergehenden Ansprüche, **dadurch gekennzeichnet, dass** der Lüfter (11) auf der von der Bodenwanne (9) abgewandten Seite des Luftkanals (18) angeordnet ist.

6. Fahrzeugsitz nach einem der vorhergehenden Ansprüche, **dadurch gekennzeichnet, dass** der Luftkanal (18) zumindest auf der Seite des Sitzpolsters (8) eine das Sitzpolster (8) stützende Kanalwand (17) aufweist.

7. Fahrzeugsitz nach einem der vorhergehenden Ansprüche, **dadurch gekennzeichnet, dass** der Lüfter (11) ein Gehäuse (12) aufweist, das mit der Kanalwand (17) verbunden ist.

8. Fahrzeugsitz nach einem der vorhergehenden Ansprüche, **dadurch gekennzeichnet, dass** in dem Sitzpolster (8) ein Drahtrahmen, insbesondere Federdrahtrahmen (21), angeordnet ist.

9. Hintersitzanlage (1) für ein Kraftfahrzeug, mit einer im Hintersitzbereich erhöht angeordneten und zumindest im Wesentlichen horizontal ausgerichteten Karosseriewand (4), und mit zumindest einem auf der Karosseriewand (4) angeordneten Fahrzeugsitz (2,3), **dadurch gekennzeichnet, dass** der Fahrzeugsitz (2,3) gemäß einem der Ansprüche 1 bis 8 ausgebildet ist.

10. Hintersitzanlage nach Anspruch 9, **dadurch gekennzeichnet, dass** die Lüftereinrichtung (10) einer Längsseite des Sitzteils (5,6) zugeordnet ist.

## Claims

1. Vehicle seat (2, 3) for a rear seat system (1) of a motor vehicle, comprising a seat part (5, 6) which has a floorpan (9) and a seat cushion (8) arranged on the floorpan (9), wherein the floorpan (9) is designed to be placed and fastened on a body wall (4) of the motor vehicle, and comprising a fan device (10) integrated into the seat part (5, 6), which has at least one electrically operated fan (11) and at least one air duct (18) leading from an edge region of the seat part (5, 6) to the fan (11), wherein the air duct (18) is formed at least substantially between the seat cushion (8) and the floorpan (9) the floorpan (9) has an edge portion (20) in the edge region, which is spaced from the seat cushion (8) and arranged below the seat cushion (8) to form a gap between the floorpan (9) and the seat cushion (8) as an intake opening (19), and the air duct (18) opens into the intake opening (19) spaced from an outer edge (15) of the seat cushion (8) such that the intake opening (19) extends the air duct (18) below the seat cushion (8).

2. Vehicle seat according to claim 1, **characterized in that** the edge portion (20) of the floorpan (9) is aligned such that a distance between the seat cushion (8) and the floorpan (9) increases toward the outer edge (15) of the seat cushion (8).

3. Vehicle seat according to either of the preceding claims,
**characterized in that** the fan (11) is arranged spaced from the edge portion (20) in the air duct (18).

4. Vehicle seat according to any of the preceding claims, **characterized in that** the air duct (18) and the intake opening (19) are designed such that an air flow passes from the intake opening (19) to the fan (11) without flow reversal.

5. Vehicle seat according to any of the preceding claims,
**characterized in that** the fan (11) is arranged on the side of the air duct (18) facing away from the floorpan (9).

6. Vehicle seat according to any of the preceding claims,
**characterized in that** the air duct (18) has, at least on the side of the seat cushion (8), a duct wall (17) supporting the seat cushion (8).

7. Vehicle seat according to any of the preceding claims, **characterized in that** the fan (11) has a housing (12) which is connected to the duct wall (17).

8. Vehicle seat according to any of the preceding claims, **characterized in that** a wire frame, in particular a spring wire frame (21), is arranged in the seat cushion (8).

9. Rear seat system (1) for a motor vehicle, comprising an at least substantially horizontally aligned body wall (4) arranged so as to be elevated in the rear seat region, and comprising at least one vehicle seat (2, 3) arranged on the body wall (4), **characterized in that** the vehicle seat (2, 3) is designed according to any of claims 1 to 8.

10. Rear seat system according to claim 9, **characterized in that** the fan device (10) is assigned to a longitudinal side of the seat part (5, 6).

## Revendications

1. Siège de véhicule (2, 3) pour une installation de sièges arrière (1) d'un véhicule automobile, comportant une partie de siège (5, 6) qui présente un bac de fond (9) et un rembourrage de siège (8) disposé sur le bac de fond (9), dans lequel le bac de fond (9) est réalisé pour être déposé et fixé sur une paroi de carrosserie (4) du véhicule automobile, et comportant un dispositif de ventilation (10) intégré dans la partie de siège (5, 6), lequel dispositif de ventilation présente au moins un ventilateur (11) pouvant être actionné électriquement et au moins un canal d'air (18) menant d'une zone de bord de la partie de siège (5, 6) au ventilateur (11), dans lequel le canal d'air (18) est réalisé au moins sensiblement entre le rembourrage de siège (8) et le bac de fond (9), le bac de fond (9) présente dans la zone de bord une section de bord (20) qui est disposée à distance du rembourrage de siège (8), en dessous du rembourrage de siège (8), afin de former un interstice entre le bac de fond (9) et le rembourrage de siège (8) sous forme d'ouverture d'aspiration (19), et le canal d'air (18) débouche dans l'ouverture d'aspiration (19) à distance d'un bord extérieur (15) du rembourrage de siège (8), de sorte que l'ouverture d'aspiration (19) prolonge le canal d'air (18) en dessous du rembourrage de siège (8).

2. Siège de véhicule selon la revendication 1, **caractérisé en ce que** la section de bord (20) du bac de fond (9) est orientée de telle sorte qu'une distance entre le rembourrage de siège (8) et le bac de fond (9) augmente en direction du bord extérieur (15) du rembourrage de siège (8).

3. Siège de véhicule selon l'une des revendications précédentes, **caractérisé en ce que** le ventilateur (11) est disposé à distance de la section de bord (20) dans le canal d'air (18).

4. Siège de véhicule selon l'une des revendications précédentes, **caractérisé en ce que** le canal d'air (18) et l'ouverture d'aspiration (19) sont réalisés de telle sorte qu'un flux d'air passe de l'ouverture d'aspiration (19) au ventilateur (11) sans inversion de flux.

5. Siège de véhicule selon l'une des revendications précédentes, **caractérisé en ce que** le ventilateur (11) est disposé sur le côté du canal d'air (18) opposé au bac de fond (9).

6. Siège de véhicule selon l'une des revendications précédentes, **caractérisé en ce que** le canal d'air (18) présente, au moins côté rembourrage de siège (8), une paroi de canal (17) soutenant le rembourrage de siège (8).

7. Siège de véhicule selon l'une des revendications précédentes, **caractérisé en ce que** le ventilateur (11) présente un boîtier (12) qui est relié à la paroi de canal (17).

8. Siège de véhicule selon l'une des revendications précédentes, **caractérisé en ce qu'un** cadre de fils, en particulier un cadre de fils de suspension élastiques (21), est disposé dans le rembourrage de siège (8).

9. Installation de siège arrière (1) pour un véhicule automobile, comportant une paroi de carrosserie (4) disposée en hauteur dans la zone de siège arrière et orientée au moins sensiblement horizontalement, et comportant au moins un siège de véhicule (2, 3) disposé sur la paroi de carrosserie (4), **caractérisée en ce que** le siège de véhicule (2, 3) est réalisé selon l'une des revendications 1 à 8.

10. Installation de siège arrière selon la revendication 9, **caractérisée en ce que** le dispositif de ventilation (10) est associé à un côté longitudinal de la partie de siège (5, 6).
